# EUROPEAN PATENT APPLICATION

(11) **EP 4 648 174 A1**
(43) Date of publication of application: **12.11.2025**
(21) Application number: 25172603.0
(22) Date of filing: 25.04.2025
(51) Int. Cl.: H01M 10/42, H01M 10/44, H01M 10/46, H01M 10/48, H01M 10/617, H01M 50/244, H01M 50/256

(54) **A TRANSPORT AND STORAGE UNIT FOR CHARGE CYCLING OF BATTERY MODULES**

(30) Priority: 07.05.2024 DK PA202430222
(71) Applicant: VESTAS WIND SYSTEMS A/S, 8200 Aarhus N (DK)
(72) Inventor: Søgaard, Morten Bagger, 7700 Thisted (DK); Hansen, Torben Møller, 8240 Risskov (DK)
(74) Representative: Vestas Patents Department

(57) **Abstract**

A transport and storage unit (1) for accommodating two or more battery modules (9, 10, 11, 12, 13) during transport and/or storage is disclosed. Two or more mounting interfaces (8), are each configured to receive and establish electrical connection to a battery module (9, 10, 11, 12, 13). A charge cycling system is electrically connected to the two or more mounting interfaces (8), and a controller is configured to control the charge cycling system so as to periodically charge and discharge battery modules (9, 10, 11, 12, 13) being mounted in the two or more mounting interfaces (8). At least one transport interface (3, 4) is provided for connecting the transport and storage unit (1) to a transport device, so as to allow movement of the transport and storage unit (1) by means of the transport device.

Furthermore a method for charge cycling two or more battery modules using such a transport and storage unit (1).

## Description

### FIELD OF THE INVENTION

The present invention relates to a transport and storage unit for accommodating two or more battery modules during transport and/or storage. The transport and storage unit according to the invention allows for automatic charge cycling of the battery modules accommodated therein. The invention further relates to a method for charge cycling of two or more battery modules during transport and/or storage, using such a transport and storage unit.

### BACKGROUND OF THE INVENTION

Battery modules are applied for various purposes. For instance, in wind turbines battery modules may be applied for supplying power to auxiliary systems, such as heating systems, cooling systems, pitch mechanisms, yaw mechanisms, various sensors, etc.

When battery modules are to be installed in a wind turbine, or when battery modules are being replaced, the battery modules need to be transported to the site of the wind turbine. For safety reasons there are requirements with regard to transport of battery modules, for instance with regard to the charge level, distance between battery modules, etc. Previously, it has been manually ensured that such requirements are met before transportation of battery modules is initiated.

Furthermore, a significant time period may lapse from the battery modules are manufactured, or from they are purchased, and until they are installed at their destination. During this time period, the battery modules must be stored in an appropriate manner, e.g. so as to avoid degradation of the battery modules. For instance, the charge level of the battery modules needs to be cycled periodically. Previously, this has been handled manually by picking individual battery modules being stored at a storage facility, and connecting them, e.g. one at a time, to a charge cycler. This is cumbersome, time consuming and involves manual handling of heavy loads. Moreover, there is a risk of overlooking battery modules being stored with the consequence that such battery modules are not appropriately charge cycled, and this may potentially lead to degradation of the battery modules.

In addition, since battery modules are usually arranged in the nacelle of wind turbines, they will subsequently need to be hoisted from the foot of the tower to the installation position in the nacelle. This would normally be done by hoisting the battery modules one at a time. Large wind turbines may require several battery modules, and therefore installing or replacing all battery modules of a large wind turbine may require a significant number of hoisting operations, and possibly manual handling. This is time consuming as well as expensive, in particular for offshore wind turbines.

### DESCRIPTION OF THE INVENTION

It is an object of embodiments of the invention to provide a transport and storage unit for accommodating two or more battery modules which allows for automatic charge cycling of the battery modules.

It is a further object of embodiments of the invention to provide a method for charge cycling two or more battery modules during transport and/or storage which is easier and more failsafe than prior art methods.

According to a first aspect the invention provides a transport and storage unit for accommodating two or more battery modules during transport and/or storage, the transport and storage unit comprising:
- two or more mounting interfaces, each being configured to receive a battery module, and each being configured to establish electrical connection to a battery module mounted therein,
- a charge cycling system being electrically connected to the two or more mounting interfaces,
- a controller configured to control the charge cycling system so as to periodically charge and discharge battery modules being mounted in the two or more mounting interfaces, and
- at least one transport interface for connecting the transport and storage unit to a transport device, so as to allow movement of the transport and storage unit by means of the transport device.

Thus, the first aspect of the invention relates to a transport and storage unit. The transport and storage unit is configured to accommodate two or more battery modules during transport and/or storage. Thus, when two or more battery modules are accommodated in the transport and storage unit, these are handled as one entity. For instance, the battery modules may be transported along with the transport and storage unit as a single entity. The transport and storage unit may be a substantially closed unit, e.g. enclosing battery modules accommodated therein.

The transport and storage unit comprises two or more mounting interfaces, each being configured to receive a battery module. Thus, the mounting interfaces define the relative positions of the battery modules within the transport and storage unit. Thus, it is efficiently and easily ensured that the battery modules are appropriately positioned relative to each other, e.g. with prescribed distances there between. For instance, the mounting interfaces may only allow battery modules to be introduced into the transport and storage unit in a correct manner, such as with a correct orientation, etc., and/or may only allow appropriate types of battery modules to be mounted therein.

Each mounting interface is further configured to establish electrical connection to a battery module mounted therein. Thus, when a battery module is correctly mounted in a mounting interface, an appropriate electrical connection is established to the battery. This will be described in further detail below.

The transport and storage unit further comprises a charge cycling system being electrically connected to the two or more mounting interfaces. Thus, due to the electrical connections established between battery modules and the respective mounting interfaces where the battery modules are mounted, each battery module is electrically connected to the charge cycling system. Accordingly, the charge cycling system may be regarded as electrically interconnecting the battery modules mounted in the mounting interfaces.

Furthermore, the transport and storage unit comprises a controller configured to control the charge cycling system. More particularly, the controller is configured to control the charge cycling system in such a manner that it causes periodical charge and discharge of battery modules being mounted in the two or more mounting interfaces. Thus, the charge cycling system, and the associated controller, automatically ensure appropriate charge cycling of battery modules accommodated in the transport and storage unit, regardless of the length of the storage period. Furthermore, this is obtained without having to manually move the individual battery modules from a storage position to a charge cycler, and back again, thus avoiding such cumbersome and time consuming manual handling of the battery modules.

The controller may, e.g., be or comprise a programmable logic controller (PLC). It may be a separate unit, or it may form an integral part of the charge cycling system.

Finally, the transport and storage unit comprises at least one transport interface for connecting the transport and storage unit to a transport device. This allows the transport and storage unit to be easily connected to an appropriate transport device, thus allowing the transport and storage unit, with the battery modules accommodated therein, to be easily transported by means of the transport device. This allows for safe and appropriate transport of the battery modules.

The charge cycling system may comprise an external power source. The periodic charging and discharging of the battery modules will normally cause power losses in the battery modules over time. In the case of long storage periods, such power losses may reach a level where it is no longer possible to reach required charge levels of the battery modules. In order to prevent such a situation, the external power source may be applied for continuously or periodically compensating such power losses, thus ensuring that the total charge level of the battery modules remains essentially constant. Since the power losses due to periodic charging and discharging of the battery modules may be expected to be small compared to the typical charge levels of the battery modules, the output power of the external power source need not be high. For instance, the external power source may be a simple 115-230 V (AC) power source with a very low power charge/discharge functionality. The external power source may, e.g., be in the form of a photovoltaic cell, but other suitable kinds of power sources may also be applied.

The external power source may not necessarily need to be permanently connected to the transport and storage unit. For instance, in the case of a long storage period, the external power source may merely be connected to the transport and storage unit at certain time intervals, e.g. once a year, so as to enable compensation for power losses as described above. Furthermore, the external power source may be dispensed with during transport of the transport and storage unit. When the external power source is not connected to the transport and storage unit, the transport and storage unit may operate as a standalone autonomous charge cycler.

The controller may be configured to simultaneously causing discharging of at least a first battery module and charging of at least a second battery module, so as to transfer charge from the first battery module to the second battery module. According to this embodiment, charge is transferred among the battery modules, e.g. periodically or cyclically, so as to periodically cause each of the battery modules to be alternatingly charged and discharged. Thereby the charge cycling of the battery modules can be performed without requiring external power supply and/or external power storage. The only requirement is that when one battery module needs to be discharged, another battery module must be capable of absorbing the charge from the discharging battery module, and vice versa. Thus, not all of the battery modules can be fully charged, i.e. at any given point in time at least one of the battery modules must have a charge level which is less than 100%, thus enabling at least that battery module to absorb charge from other battery modules being discharged. Before simultaneous discharging and charging of battery modules as described above is commenced, the least first battery module may be fully charged.

The charge cycling system may be configured to provide state of health (SOH) calibration and/or state of charge (SOC) calibration of the battery modules. According to this embodiment, it is ensured that the SOH and/or the SOC of battery modules being stored remains within a suitable range. For instance, it may be ensured that the SOC is appropriately cycled according to specifications of the manufacturer, e.g. between 50% and 100% of full charge. Furthermore, it may be ensured that SOH and/or the SOC is at a suitable level when the battery modules are to be installed, e.g. after a long storage period. In addition, when the transport and storage unit, with the battery modules, is to be transported, e.g. from a storage site to an installation site, it can be ensured that the SOC of the battery modules is at a level which meets the requirements for transport of batteries.

Alternatively or additionally, the charge cycling system may be configured to provide battery conditioning for the battery modules. This could, e.g., include conditioning the battery modules with regard to SOH and/or SOC, essentially as described above. Furthermore, this may include ensuring that the battery modules are kept at a suitable temperature level, e.g. by providing appropriate cooling and/or heating of the battery, applying moisture control within the transport and storage unit, and/or any other suitable kind of battery conditioning.

Alternatively or additionally, the transport and storage unit may be provided with a fire protection or suppression system, e.g. including smoke detectors and/or other kinds of fire detectors.

The transport and storage unit may further comprise a temperature control system. The temperature control system may, e.g., be applied for ensuring that a suitable temperature is maintained within the transport and storage unit, i.e. within the environment where the battery modules are accommodated. This could, e.g., include providing cooling and/or heating of the space inside the transport and storage unit, depending on the ambient temperature as well as on other circumstances having an impact on the temperature at or near the battery modules.

The transport and storage unit may further comprise a remote monitoring system. According to this embodiment, the transport and storage system, and thus the battery modules accommodated therein, may be monitored from a remote location, by the remote monitoring system communicating relevant data to a central monitoring facility arranged remotely with respect to the transport and storage system. Thereby it may, e.g., be ensured that the transport and storage unit operates as it is supposed to, in particular that the charge cycling of the battery modules is correctly and appropriately performed, thus minimising the risk of degradation of the battery modules. Furthermore, any errors or malfunction of the transport and storage unit may be easily and fast detected. For instance, such errors or malfunction may trigger an alert or an alarm to notify surveillance staff. Due to the remote monitoring system, this can be obtained without requiring that personnel is present on site, e.g. at a storage site.

Furthermore, centrally located surveillance staff may be capable of monitoring a vast number of transport and storage units in a safe and reliable manner, thus reducing the total staff requirements for performing this task. In addition, this allows for data related to a vast number of transport and storage units to be collected at the central monitoring facility, e.g. for the purpose of statistical analysis.

The communication connection between the central monitoring facility and the remote monitoring system of the transport and storage unit may be bidirectional. In this case the remote monitoring system of the transport and storage unit may provide surveillance data to the central monitoring facility, while the central monitoring facility may provide relevant control commands to the transport and storage unit. Such control commands could, e.g., include initiation of a charge cycling cycle, setting of appropriate charge levels of the battery modules, e.g. immediately prior to initiation of transport of the transport and storage unit, activation of an external power source, control of relevant conditioning systems, etc.

The at least one transport interface may comprise at least one crane hooking point allowing the transport and storage unit to be connected to a crane. This allows the transport and storage unit to be hoisted by means of a crane, without requiring any additional tools or devices for connecting the transport and storage unit to the crane. For instance, this allows two or more battery modules being accommodated in the transport and storage unit to be hoisted from a position near the base of a tower of a wind turbine to an installing position in the nacelle of the wind turbine in a single hoisting operation. This reduces the time consumption, the need for manual handling, as well as the costs of installing the battery modules in a wind turbine.

The transport and storage unit may, e.g., have a size and weight allowing it to be hoisted by means of a standard crane. For instance, the transport and storage unit may have a base area corresponding to the size of a standard pallet, and the weight of the transport and storage unit with battery modules mounted in all mounting interfaces may be below the maximum lifting capacity of a standard crane.

Alternatively or additionally, the at least one transport interface may include a pallet lifter interface allowing a pallet lifter to move the transport and storage unit, wheels, and/or any other suitable kind of transport interface enabling movement of the transport and storage unit.

The transport and storage unit may further comprise an ingress protecting outer enclosure. According to this embodiment, the battery modules accommodated in the transport and storage unit are appropriately protected from ingress, e.g. in the form of water, dust, etc. For instance, the outer enclosure may at least meet the requirements of IP54, such as at least the requirements of IP64.

The transport and storage unit may, e.g., be provided with an adjustable ingress protection system, allowing for the ingress protection degree to be adjusted according to specific requirements or ambient conditions. This could, e.g., include one or more valves which, when closed, provide complete sealing of the transport and storage unit. This could, e.g., be relevant in order to prevent salty air from entering the transport and storage unit.

According to a second aspect the invention provides a method for charge cycling two or more battery modules during transport and/or storage of the battery modules, the method comprising the steps of:
- mounting each of the two or more battery modules in a mounting interface of a transport and storage unit according to the first aspect of the invention,
- charging each of the battery modules to an initial charge level being less than 100%,
- selecting at least a first battery module and at least a second battery module,
- simultaneously discharging the first battery module and charging the second battery module, thus transferring charge from the first battery module to the second battery module.

The method according to the second aspect of the invention applies a transport and storage unit according to the first aspect of the invention. Thus, a skilled person would readily recognise that any feature described in combination with the first aspect of the invention could also be combined with the second aspect of the invention, and vice versa.

Thus, the method according to the second aspect of the invention is a method for charge cycling two or more battery modules during transport and/or storage. This has already been described above with reference to the first aspect of the invention. The charge cycling is performed in the following manner.

Initially, the two or more battery modules are each mounted in a mounting interface of transport and storage unit of the kind described above with reference to the first aspect of the invention. Thus, each battery module is electrically connected to the charge cycling system of the transport and storage unit, and thus to each other.

Next, each of the battery modules is charged to an initial charge level being less than 100%. Accordingly, none of the battery modules is fully charged at this stage.

At least a first battery module and at least a second battery module are then selected, and the first battery module is discharged, while the second battery module is simultaneously charged, i.e. the charge level of the first battery module is decreased while the charge level of the second battery module is increased. Thus, charge is essentially transferred from the first battery module to the second battery module. This is possible because none of the battery modules were initially fully charged, and the second battery module is therefore capable of absorbing the charge from the first battery module.

At a later point in time, the charge transfer may be reversed, i.e. the second battery module may be discharged while the first battery module is simultaneously charged, thus transferring charge from the second battery module to the first battery module. In this case the charge level of the first battery module as well as the charge level of the second battery module may be alternatingly cycled between a minimum charge level, e.g. 50%, and a maximum charge level, e.g. 100%, as a standalone autonomous charge cycling setup.

The method may further comprise the step of sequentially charging and discharging the battery modules by transferring charge among the battery modules. This could, e.g., be obtained by two battery modules alternatingly charging and discharging by transferring charge between them as described above. As an alternative, in the case that at least three battery modules are mounted in the transport and storage unit, a first battery module may be discharged while a second battery module is charged, and subsequently the second battery module may be discharged while a third battery module is charged, and so forth. In this case the battery modules are sequentially undergoing charge cycling, and it is, thus, efficiently ensured that all battery modules are appropriately charge cycled.

The battery modules may, e.g., be sequentially charged and discharged between a charge level of approximately 100% and a charge level of approximately 50%. Such charge cycling is appropriate for minimising degradation of battery modules, and it meets the standard requirements of many battery manufacturers. Alternatively or additionally, the battery modules may be charged or discharged to a charge level being optimal for a given occurring situation, such as a charge level being optimal for long time storage of the battery modules or a charge level being optimal for transport of the battery modules.

The method may further comprise the step of logging charging and discharging of the battery modules. According to this embodiment, it will be possible to retrieve a charge/discharge history of a given battery module. This may, e.g., be relevant with regard to estimating the condition or quality of the battery module, e.g. with regard to possible degradation thereof as a result of long time storage, and/or estimating remaining lifetime of the battery modules. Furthermore, this may be relevant for documenting that the battery modules have been appropriately charge cycled during storage.

The logging of charging and discharging of the battery modules may, e.g., be performed by means of a remote monitoring system, as described above with reference to the first aspect of the invention. For instance, the logged charging and discharging of the battery modules may be communicated to a battery monitoring system (BMS). As an alternative, the logging of the charging and discharging of the battery modules may be performed by means of equipment being directly mounted on or attached to the battery modules, or to individual batteries of the battery modules. This could, e.g., be in the form of an EEprom or similar. In this case the historical information regarding charging and discharging of a given battery module is readily available directly from the battery module.

The method may further comprise the step of remotely monitoring the battery modules. This could, e.g., be performed by means of a remote monitoring system as described above with reference to the first aspect of the invention. Furthermore, the monitoring may include logging the charging and discharging of the battery modules as described above. Alternatively or additionally, other parameters of the battery modules may be monitored, such as temperature, connection to and disconnection from an external power source, etc.

As described above with reference to the first aspect of the invention, the remote monitoring may trigger alarms, alerts, warnings and/or service requests. Furthermore, this may allow for remote change of mode of the battery modules, e.g. from 'storage mode' to 'transport mode', or vice versa, and/or cause one or more battery modules to become fully charged. Finally, remote disconnection of the battery modules immediately prior to initiating transport thereof may be performed.

The method may further comprise the step of compensating power losses of the battery modules by means of an external power source. This has already been described in detail above with reference to the first aspect of the invention.

### BRIEF DESCRIPTION OF THE DRAWINGS

The invention will now be described in further detail with reference to the accompanying drawings in which
Figs. 1-4 illustrate a transport and storage unit according to an embodiment of the invention,
Figs. 5 and 6 illustrate charging and discharging of battery modules in accordance with a method according to two different embodiments of the invention, and
Fig. 7 is a flow chart illustrating a method according to an embodiment of the invention.

### DETAILED DESCRIPTION OF THE DRAWINGS

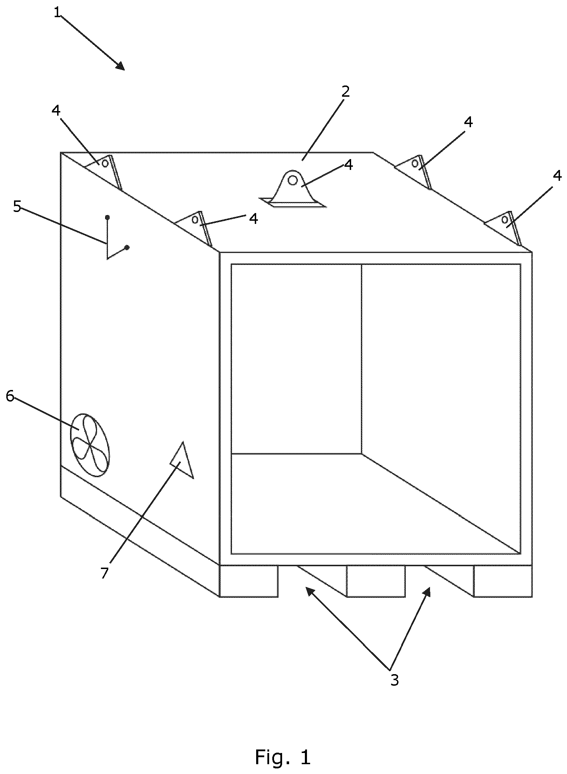

Figs. 1-4 illustrate a transport and storage unit 1 according to an embodiment of the invention. The transport and storage unit 1 comprises an outer enclosure 2 with a door (not shown) which, when open, allows access to an interior defined inside the outer enclosure 2. When the door is closed, it completes the outer enclosure 2, so that the outer enclosure 2 provides ingress protection, e.g. up to at least IP54.

The transport and storage unit 1 further comprises a pallet lifter interface 3 and five crane hooking points 4. The pallet lifter interface 3 is configured to engage with a pallet lifter, so as to allow the transport and storage unit 1 to be moved by means of a pallet lifter. The crane hooking points 4 are configured to engage with a crane hook, so as to allow the transport and storage unit 1 to be lifted and lowered by means of a crane.

An antenna 5 allows a controller (not shown) of the transport and storage unit 1 to communicate wirelessly with an external communication unit, e.g. at a remote monitoring centre.

A ventilator fan 6 allows for ventilation of the interior part of the outer enclosure 2, e.g. in order to control the temperature in the interior part of the outer enclosure 2. A power connection 7 allows the transport and storage unit 1 to be electrically connected to an external power source. This will be described in further detail below.

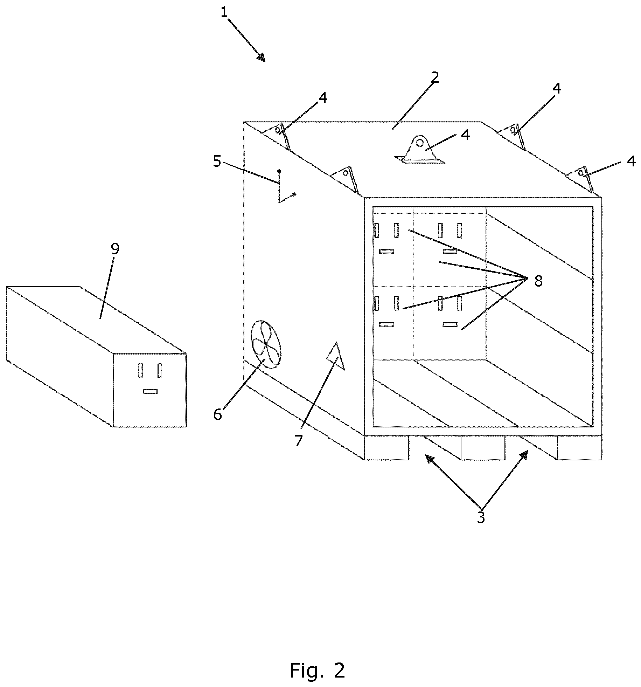

In Fig. 1 the interior part of the outer enclosure 2 is empty. In Fig. 2 a number of mounting interfaces 8 are provided inside the transport and storage unit 1. Each mounting interface 8 comprises electrical connectors adapted to mate with electrical connectors formed on a battery module 9. A battery module 9 is shown next to the transport and storage unit 1. Thus, when a battery module 9 is mounted at a mounting interface 8 of the transport and storage unit 1, an electrical connection is established between the battery module 9 and the transport and storage unit 1, more particularly between the battery module 9 and a charge cycling system (not shown) of the transport and storage unit 1.

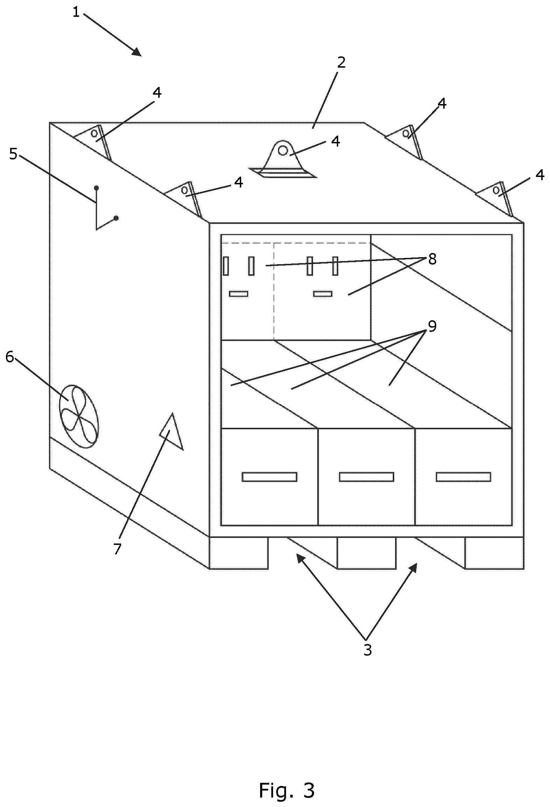

In Fig. 3 three battery modules 9 have been mounted at respective mounting interfaces 8. However, the remaining mounting interfaces 8 are still unoccupied.

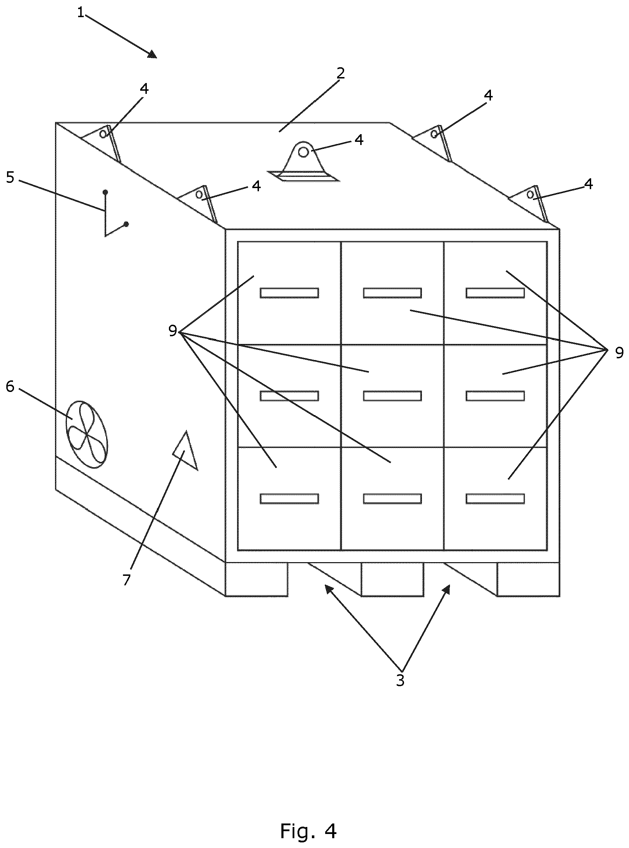

In Fig. 4 battery modules 9 have been mounted at each of the mounting interfaces 8, i.e. a total of nine battery modules 9 have been mounted in the transport and storage unit 1, each being electrically connected to the charge cycling system. Thus, the battery modules 9 are electrically connected to each other, via the charge cycling system. This allows the charge level of each of the battery modules 9 to be cycled periodically by means of the charge cycling system, e.g. by simultaneously charging at least one of the battery modules 9 while discharging at least one of the other battery modules 9.

Thus, the battery modules 9 can be stored and/or transported by means of the transport and storage unit 1, and while being stored and/or transported, the battery modules 9 can be periodically charge cycled, without requiring that the battery modules 9 are moved to a specialised charge cycling system, or undergoes other forms of manual handling, and essentially without requiring external powering of the battery modules 9 and/or the charge cycling system. Thereby it is ensured that degradation of the battery modules 9 during storage and/or transport is minimised, in a cost effective, easy, safe and reliable manner, and possibly automatically.

Charge cycling as described above introduces a small power loss, and therefore it may be required to supply power to the battery modules 9 mounted in the transport and storage unit 1 and/or to the transport and storage unit 1, at least for limited periods of time, in order to compensate for this power loss. To this end a power supply can be, at least temporarily, connected to the power connection 7. In addition, an initial charge level of the battery modules 9 mounted at the mounting interfaces 8 of the transport and storage unit 1 can be obtained by means of a suitable power source connected to the power connection 7.

It should be noted that, even though Figs. 3 and 4 shows battery modules 9 arranged essentially in abutment with each other, it is not ruled out that the mounting interfaces 8 are arranged in such a manner that well defined spaces will be present between the battery modules 9. For instance, such spaces may be designed to fulfil requirements that need to be met when storing, and in particular when transporting, battery modules.

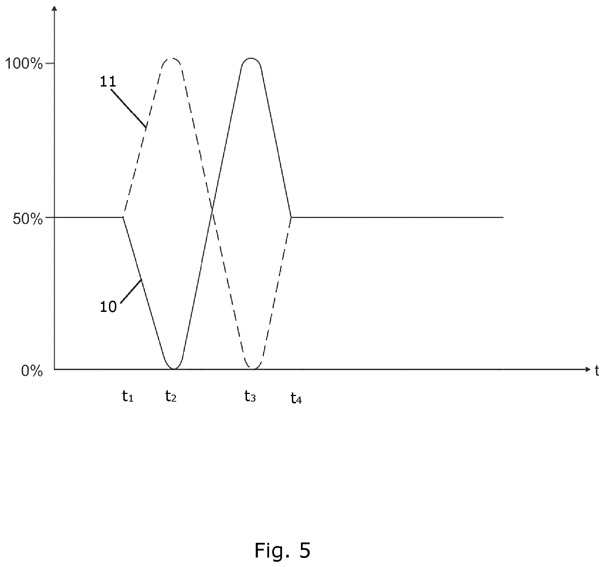

Fig. 5 illustrates charge cycling of two battery modules in accordance with a method according to a first embodiment of the invention. More particularly, Fig. 5 shows charging curves for a first 10 and a second 11 battery module, respectively.

Initially, the first battery module, illustrated by the solid line 10, as well as the second battery module, illustrated by the dashed line 11, are charged to a charge level of approximately 50% of full charge. At time t₁ charge cycling is initiated by simultaneously initiating discharging of the first battery module 10 and charging of the second battery module 11. Thus, charge is essentially 'transferred' from the first battery module 10 to the second battery module 11, until the second battery module 11 has been fully charged, i.e. reaches a charge level of 100%, and the first battery module 10 has been fully discharged, i.e. reaches a charge level of 0%, at time t₂.

At time t₂ simultaneous discharging of the second battery module 11 and charging of the first battery module 10 is initiated, i.e. charge is now essentially 'transferred' from the second battery module 11 to the first battery module 10. This continues until the first battery module 10 has been fully charged and the second battery module 11 has been fully discharged, at time t₃.

At time t₃ simultaneous discharging of the first battery module 10 and charging of the first battery module 11 is once again initiated and continues until time t₄, where the charge level of the first battery module 10 as well as of the second battery module 11 has reached 50%.

Thus, from time t₁ to time t₄, each of the first battery module 10 and the second battery module 11 undergoes a charge cycling process, during which the battery module 10, 11 becomes fully charged (charge level 100%) as well as fully discharged (charge level 0%). This can be performed periodically, with suitable time intervals. Between the charge cycling processes, the first battery module 10 as well as the second battery module 11 is kept at a charge level of 50%, which is considered a suitable charge level for storage and transport of battery modules. The periodic charge cycling ensures that the degradation of the battery modules 10, 11 during storage and/or transport is minimised. Furthermore, since the charge cycling includes 'transferring' charge among the battery modules 10, 11, this can be obtained without involving external charge storage and/or power supply.

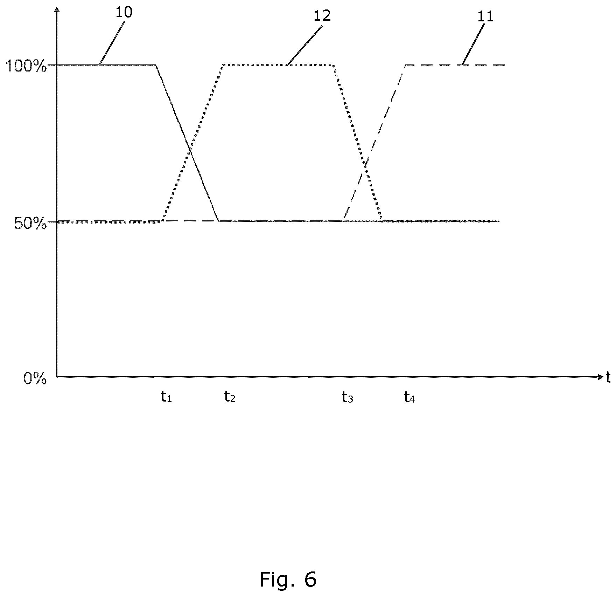

Fig. 6 illustrates charge cycling of three battery modules in accordance with a method according to a second embodiment of the invention, in the form of charging curves for a first 10, a second 11 and a third 12 battery module.

Initially, the first battery module, illustrated by the solid line 10, is fully charged, i.e. has a charge level of 100%, while the second battery module, illustrated by the dashed line 11, and the third battery module, illustrated by the dotted line 12, are charged to a charge level of approximately 50% of fully charged.

At time t₁ simultaneous discharging of the first battery module 10 and charging of the third battery module 12 is initiated, while the second battery module 11 is kept at a charge level of 50%. Thus, similarly to the embodiment illustrated in Fig. 5, charge is 'transferred' from the first battery module 10 to the third battery module 12. This continues until time t₂, where the first battery module 10 has reached a charge level of 50%, and the third battery module 12 has reached a charge level of 100%, i.e. has been fully charged.

At time t₃ simultaneous discharging of the third battery module 12 and charging of the second battery module 11 is initiated, while the first battery module 10 is kept at a charge level of 50%, thus 'transferring' charge from the third battery module 12 to the second battery module 11. This continues until time t₄ where the third battery module 12 has reached a charge level of 50%, and the second battery module 11 has been fully charged, i.e. has reached a charge level of 100%.

This is repeated, so as to cyclically 'transfer' charge among the first battery module 10, the second battery module 11 and the third battery module 12, thus ensuring that each battery module 10, 11, 12 is periodically cycled between a charge level of 50% and a charge level of 100%.

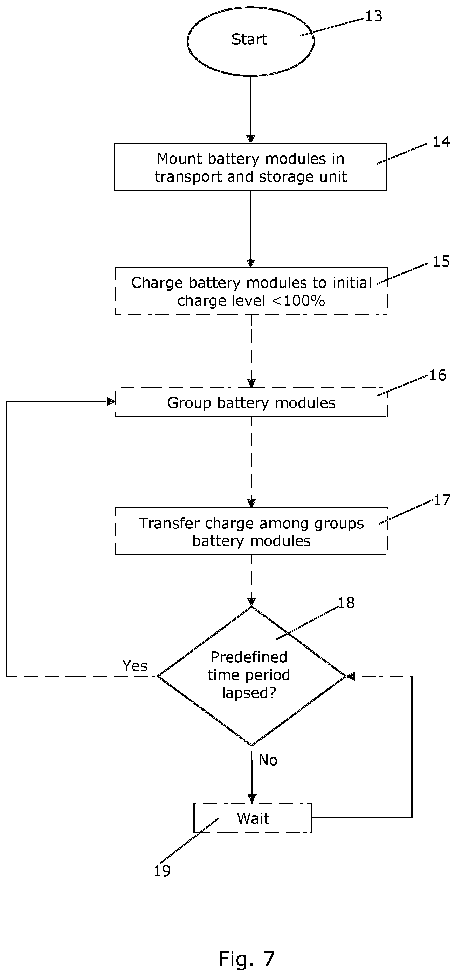

Fig. 7 is a flow chart illustrating a method according to an embodiment of the invention. The process is started at step 13. At step 14, at least two battery modules are mounted at respective mounting interfaces of a transport and storage unit, in such a manner that each battery module is electrically connected to a charge cycling system of the transport and storage unit, and thus to each other. The transport and storage unit may, e.g., be of the kind illustrated in Figs. 1-4.

At step 15 each of the battery modules is charged to an initial charge level being lower than 100%, i.e. none of the battery modules is fully charged, and each of the battery modules has charge capacity for receiving charge from one of the other battery modules. For instance, the initial charge level of each battery module may be approximately 75%.

At step 16 the battery modules are grouped into at least two groups, thus selecting at least a first battery module and at least a second battery module.

At step 17, charge is transferred among the groups of battery modules by simultaneously discharging the selected first battery module and charging the selected second battery module. This may cause the charge level of the second battery module to reach 100%, while the charge level of the first battery module reaches a level below the initial charge level. Subsequently, the second battery module may be discharged, while simultaneously charging the first battery module, or another battery module. This may be repeated until each of the battery modules has undergone a charge cycling process in which they have reached a charge level of 100%. All of the battery modules may then be charged or discharged to reach the initial charge level.

At step 18 it is investigated whether or not a predefined time period has lapsed since the charge cycling process was completed. The predefined time period could, e.g. be approximately 3-6 months. If the predefined time period has not yet lapsed, the process is forwarded to step 19 for further waiting, and then returned to step 18 for continued monitoring regarding whether or not the predefined time period has lapsed.

In the case that step 18 reveals that the predefined time period has lapsed, the process is returned to step 16, so as to once again group the battery modules, and subsequently perform charge cycling.

## Claims

1. A transport and storage unit (1) for accommodating two or more battery modules (9, 10, 11, 12, 13) during transport and/or storage, the transport and storage unit (1) comprising:
- two or more mounting interfaces (8), each being configured to receive a battery module (9, 10, 11, 12, 13), and each being configured to establish electrical connection to a battery module (9, 10, 11, 12, 13) mounted therein,
- a charge cycling system being electrically connected to the two or more mounting interfaces (8),
- a controller configured to control the charge cycling system so as to periodically charge and discharge battery modules (9, 10, 11, 12, 13) being mounted in the two or more mounting interfaces (8), and
- at least one transport interface (3, 4) for connecting the transport and storage unit (1) to a transport device, so as to allow movement of the transport and storage unit (1) by means of the transport device.

2. A transport and storage unit (1) according to claim 1, wherein the charge cycling system comprises an external power source.

3. A transport and storage unit (1) according to claim 1 or 2, wherein the controller is configured to simultaneously causing discharging of at least a first battery module (9, 10, 11, 12, 13) and charging of at least a second battery module (9, 10, 11, 12, 13), so as to transfer charge from the first battery module (9, 10, 11, 12, 13) to the second battery module (9, 10, 11, 12, 13).

4. A transport and storage unit (1) according to any of the preceding claims, wherein the charge cycling system is configured to provide state of health (SOH) calibration and/or state of charge (SOC) calibration of the battery modules (9, 10, 11, 12, 13).

5. A transport and storage unit (1) according to any of the preceding claims, wherein the charge cycling system is configured to provide battery conditioning for the battery modules (9, 10, 11, 12, 13).

6. A transport and storage unit (1) according to any of the preceding claims, further comprising a temperature control system.

7. A transport and storage unit (1) according to any of the preceding claims, further comprising a remote monitoring system.

8. A transport and storage unit (1) according to any of the preceding claims, wherein the at least one transport interface comprises at least one crane hooking point (4) allowing the transport and storage unit (1) to be connected to a crane.

9. A transport and storage unit (1) according to any of the preceding claims, further comprising an ingress protecting outer enclosure (2).

10. A method for charge cycling two or more battery modules (9, 10, 11, 12, 13) during transport and/or storage of the battery modules (9, 10, 11, 12, 13), the method comprising the steps of:
- mounting each of the two or more battery modules (9, 10, 11, 12, 13) in a mounting interface (8) of a transport and storage unit (1) according to any of the preceding claims,
- charging each of the battery modules (9, 10, 11, 12, 13) to an initial charge level being less than 100%,
- selecting at least a first battery module (9, 10, 11, 12, 13) and at least a second battery module (9, 10, 11, 12, 13),
- simultaneously discharging the first battery module (9, 10, 11, 12, 13) and charging the second battery module (9, 10, 11, 12, 13), thus transferring charge from the first battery module (9, 10, 11, 12, 13) to the second battery module (9, 10, 11, 12, 13).

11. A method according to claim 10, further comprising the step of sequentially charging and discharging the battery modules (9, 10, 11, 12, 13) by transferring charge among the battery modules (9, 10, 11, 12, 13).

12. A method according to claim 11, wherein the battery modules (9, 10, 11, 12, 13) are sequentially charged and discharged between a charge level of approximately 100% and a charge level of approximately 50%.

13. A method according to any of claims 10-12, further comprising the step of logging charging and discharging of the battery modules (9, 10, 11, 12, 13).

14. A method according to any of claims 10-13, further comprising the step of remotely monitoring the battery modules (9, 10, 11, 12, 13).

15. A method according to any of claims 10-14, further comprising the step of compensating power losses of the battery modules (9, 10, 11, 12, 13) by means of an external power source.
